# EUROPEAN PATENT APPLICATION

(11) **EP 4 275 651 A1**
(43) Date of publication of application: **15.11.2023**
(21) Application number: 23725351.3
(22) Date of filing: 27.03.2023
(51) Int. Cl.: A61C 17/06, A61C 1/08

(54) **INTRAORAL SUCTION DEVICE**

(30) Priority: 29.03.2022 JP 2022053067
(71) Applicant: Uji, Hideyo, Chuo-ku Tokyo 1040061 (JP)
(72) Inventor: Uji, Hideyo, Chuo-ku Tokyo 1040061 (JP)
(74) Representative: Müller, Enno
(86) International application number: PCT/JP2023/012256
(87) International publication number: WO 2023/190368

(57) **Abstract**

To allow a vacuum tip and a vacuum hose to be attached to and detached from each other in a physical manner in a case of installing a light source on the vacuum tip side, it is configured that electrical connection between the vacuum tip and the vacuum hose is established in association with the attachment and detachment. An oral suction device including a vacuum hose connected to a suction source and a vacuum tip having a tube body that has a proximal end connectable to a distal end of the vacuum hose and a distal end as a suction port, includes a light source provided in the vacuum tip to illuminate inside of an oral cavity, a hose-side electrode, provided at the distal end of the vacuum hose, for supplying power from a power supply to the light source, and a tip-side electrode, provided at the proximal end of the vacuum tip and electrically connected to the light source, for receiving the power from the hose-side electrode.

## Description

### Field

The present invention relates to an oral suction device having a vacuum tip.

### Background

In dentistry, a suction device is used which sucks and removes unnecessary substances in an oral cavity with a suction tool attached to a distal end of a vacuum hose. The primary distal-end suction tools are a saliva ejector that sucks liquid (saliva, blood, or water) only and a vacuum tip that can suck both liquid and solid (fragments or the like of a tooth or metal fallen into the oral cavity).

The oral suction device is required to have a practical illumination function. In a case of using a general operating light, a cutting handpiece or a mirror held by a dentist or a suction vacuum tip held by an assistant casts a shadow when entering an oral cavity that is a narrow space. Therefore, illumination of an affected area needs to be performed so as to avoid the cutting handpiece and the vacuum tip, and an angle needs to be adjusted each time the angle of the mouth of a patient changes even a little. In particular, it is difficult for light from the operating light to reach a root canal orifice of a distal buccal root or a mesiobuccal root in a maxillary molar part.

Hence, inventions related to an oral device having an illumination function in place of a general operating light have been made (see Patent Literatures 1 to 4).

Meanwhile, since hundreds or more kinds of bacteria live in an oral cavity and various kinds of bacteria causing diseases live and propagate therein, it is also necessary in dental treatment that a portion of the oral suction device to be inserted into the oral cavity of the patient is detachable and can be sterilized or replaced with a new one (see Patent Literatures 1 to 4).

In order to realize the illumination function, there is a method of guiding light from a light source to a target of illumination by an optical fiber. However, because of the problem of heat resistance of the optical fiber in sterilization treatment, a method is used which does not arrange the optical fiber in the vacuum tip portion that is to be subjected to sterilization treatment, and instead uses a transparent or translucent light guide member for the vacuum tip, thereby guiding light guided to the proximal end of the vacuum tip by the optical fiber or the like, into the oral cavity by that light guide member (Patent Literatures 1 to 3).

However, when the optical fiber is used even in a portion other than the vacuum tip (Patent Literatures 1 and 2), attenuation of light due to passing through the optical fiber needs to be taken into consideration, and in order to obtain a device that can be practically used in dental treatment, a design considering this point is required. Such a design increases the cost.

When the inside of the oral cavity is illuminated by the light source itself, in other words, when the light source is installed on the vacuum tip side, such a design is not required. When this point is taken into consideration, there are a method in which the light source itself is attached to the suction device (Patent Literature 4), a method of installing the light source at a connecting portion between the vacuum tip and the vacuum hose and arranging an electric wire to that light source from a power supply, and the like (Patent Literature 3).

These methods are required to allow an operator to easily illuminate the inside of the oral cavity with light, and are also required to allow a design in which saliva or the like in the oral cavity does not adhere to the light source. However, Patent Literature 4 does not satisfy these points.

Further, it is also necessary that the configuration is simple and the operator can easily attach and detach the vacuum hose and the vacuum tip to/from each other while a sufficient amount of light for illuminating the inside of the oral cavity is ensured. However, Patent Literature 3 does not satisfy these points.

In the oral suction device in which the vacuum tip can be attached and detached, it is desirable that its configuration stably provides electrical connection for supplying power to the light source for illuminating the inside of the oral cavity, and it is also desirable that attaching and detaching the vacuum tip does not impose a burden on the operator.

### Citation List

### Patent Literatures

Patent Literature 1: U.S. Patent No. 5931670
Patent Literature 2: Japanese Patent Application National Publication No. 2002-506676
Patent Literature 3: Japanese Patent Application Laid-open No. 2005-177143
Patent Literature 4: Japanese Patent Application National Publication No. 2010-514532

### Summary

### Technical Problem

Even when a design of installing the light source on the vacuum tip side is allowed, that is, electrical wiring is arranged on the vacuum tip side, electrical connection between the light source and the power supply needs to correspond to attachment and detachment of the vacuum tip in order to provide a configuration in which the vacuum tip and the vacuum hose can be attached to and detached from each other.

An object of the present invention is to realize a configuration that makes the above points possible.

### Solution to Problem

In order to solve the above problem, the present invention provides the following configurations.
1) A first aspect of the present invention provides an oral suction device including a vacuum hose connected to a suction source and a vacuum tip having a tube body that has a proximal end connectable to a distal end of the vacuum hose and a distal end as a suction port, the oral suction device comprising:
   a light source provided in the vacuum tip to illuminate inside of an oral cavity;
   a hose-side electrode provided in a distal end portion of the vacuum hose and electrically connected to a power supply; and
   a tip-side electrode, provided in a proximal end portion of the vacuum tip and electrically connected to the light source, for receiving power from the hose-side electrode, wherein
   the tip-side electrode and the hose-side electrode are positioned to be in contact with and electrically connected to each other in a state where the vacuum tip and the vacuum hose have been connected to each other.
2) In the above aspect, one of ends of the vacuum tip and the vacuum hose, connected to each other, has a cut portion extending in a longitudinal direction, and the other of the ends has a locking projection having a certain length in the longitudinal direction, and
   when the vacuum tip is inserted to the vacuum hose with positions of the cut portion and the locking projection aligned with each other, connection between the vacuum tip and the vacuum hose is completed in a state where the locking projection has stopped at a deepest position in the cut portion in a joint portion between the vacuum tip and the vacuum hose.
3) In the above aspect, one of ends of the vacuum tip and the vacuum hose, connected to each other, has a cut portion formed by a first portion extending in a longitudinal direction and a second portion extending in a circumferential direction from a deepest position in the first portion, and the other of the ends has a locking projection, and
   when the vacuum tip is inserted to the vacuum hose with positions of the cut portion and the locking projection aligned with each other, connection between the vacuum tip and the vacuum hose is completed by moving the locking projection in the longitudinal direction to the deepest position in the first portion of the cut portion and then in the circumferential direction in the second portion in a joint portion between the vacuum tip and the vacuum hose.
4) In the above aspect, the oral suction device further comprises an elastic body provided on the vacuum hose and configured to bias the hose-side electrode toward the distal end of the vacuum hose.
5) In the above aspect, the oral suction device further comprises elastic bodies that are a plurality of conductors provided on the vacuum hose and configured to bias the hose-side electrode toward the distal end of the vacuum hose, wherein
   the power supply and the hose-side electrode are electrically connected to each other via the elastic bodies by electrically connecting one of the elastic bodies to a positive electrode of the power supply at one end and to a positive electrode of the hose-side electrode at the other end and electrically connecting another one of the elastic bodies to a negative electrode of the power supply at one end and to a negative electrode of the hose-side electrode at the other end.
6) In the above aspect, the light source is provided inside and/or outside a tube body of the vacuum tip and/or the light source is provided in an inside of a tube wall of the vacuum tip when the tube wall of the vacuum tip is made of a transparent or translucent resin.
7) Another aspect of the present invention provides an oral suction device in a shape of a tube body including a vacuum hose connected to a suction source, an attachment having a proximal end insertable to a distal end of the vacuum hose, and a vacuum tip having a proximal end connectable to a distal end of the attachment and a distal end as a suction port, the oral suction device comprising:
   a light source provided in the vacuum tip to illuminate inside of an oral cavity;
   an attachment-side electrode provided in a distal end portion of the attachment and electrically connected to a power supply; and
   a tip-side electrode, provided in a proximal end portion of the vacuum tip and electrically connected to the light source, for receiving power from the attachment-side electrode, wherein
   the tip-side electrode and the attachment-side electrode are positioned to be in contact with and electrically connected to each other in a state where the vacuum tip and the attachment have been connected to each other.
8) In the above aspect, the oral suction device further comprises a power-supply device provided outside a tube body of the attachment, wherein
   the power-supply device and the attachment-side electrode are electrically connected to each other.
9) In the above aspect, one of ends of the vacuum tip and the attachment, connected to each other, has a cut portion extending in a longitudinal direction, and the other of the ends has a locking projection having a certain length in the longitudinal direction, and
   when the vacuum tip is inserted to the attachment with positions of the cut portion and the locking projection aligned with each other, connection between the vacuum tip and the attachment is completed by a state where the locking projection has stopped at a deepest position in the cut portion in a joint portion between the vacuum tip and the attachment.
10) In the above aspect, one of ends of the vacuum tip and the attachment, connected to each other, has a cut portion formed by a first portion extending in a longitudinal direction and a second portion extending in a circumferential direction from a deepest position in the first portion, and the other of the ends has a locking projection, and
   when the vacuum tip is inserted to the attachment with positions of the cut portion and the locking projection aligned with each other, connection between the vacuum tip and the attachment is completed by moving the locking projection in the longitudinal direction to the deepest position in the first portion of the cut portion and then in the circumferential direction in the second portion in a joint portion between the vacuum tip and the attachment.
11) In the above aspect, the oral suction device further comprises an elastic body provided on the attachment and configured to bias the attachment-side electrode toward the distal end of the attachment.
12) In the above aspect, the oral suction device further comprises elastic bodies that are a plurality of conductors provided on the attachment and configured to bias the attachment-side electrode toward the distal end of the attachment, wherein
   the power-supply device and the attachment-side electrode are electrically connected to each other via the elastic bodies by electrically connecting one of the elastic bodies to a positive electrode of the power-supply device at one end and to a positive electrode of the attachment-side electrode at the other end and electrically connecting another one of the elastic bodies to a negative electrode of the power-supply device at one end and to a negative electrode of the attachment-side electrode at the other end.
13) In the above aspect, the light source is provided inside and/or outside a tube body of the vacuum tip and/or the light source is provided in an inside of a tube wall of the vacuum tip when the tube wall of the vacuum tip is made of a transparent or translucent resin.

### Advantageous Effects of Invention

According to the present invention, by allowing a design in which a light source is installed on the vacuum tip side, a design not considering attenuation of light becomes possible. Accordingly, the design cost is reduced. With the configuration that allows the light source to be provided even at a position not in contact with saliva or the like, practical needs in an operation can be met.

The vacuum tip itself is configured so as to be attachable to and detachable from the vacuum hose side, thereby being able to be replaced or sterilized.

Since a configuration related to electrical connection between the light source and a power supply is implemented by the configuration capable of dealing with attaching and detaching the vacuum tip, flexibility in design regarding the positions and the number of the light sources on the vacuum tip side is increased.

### Brief Description of Drawings

Figs. 1 are schematic cross-sectional views of an oral suction device according to the present invention, where (a) illustrates a state in which a vacuum tip is connected to a vacuum hose, and (b) illustrates a state in which the vacuum tip has been detached from the vacuum hose.
Fig. 2(a) is a schematic enlarged view of a cross-section of a region I in Fig. 1(b). Fig. 2(b) illustrates a different embodiment from (a) related to wiring to a hose-side electrode.
Figs. 3 are schematic end views of a hose distal end portion and a tip proximal end portion, the left part in Fig. 3(a) is a schematic end view along a line A-A' in Fig. 1(b), the right part in Fig. 3(a) is a schematic end view along a line B-B' in Fig. 1(b), and Fig. 3(b) illustrates different modes of the left part and the right part in Fig 3(a), respectively.
Fig. 4 is a schematic enlarged view of a side surface of the region I in Fig. 1(b).
Fig. 5 is a schematic enlarged view of the side surface of the region I in Fig. 1(b) and illustrates a different mode from that in Fig. 4.
Fig. 6(a) is a schematic perspective view of the hose distal end portion in a case of Fig. 5. Fig. 6(b) illustrates a state of a distal end of a vacuum hose as viewed from its distal end side.
Figs. 7 schematically illustrate a cross-section of an embodiment of an oral suction device including an attachment, where (a) illustrates a state where the vacuum tip and the vacuum hose are connected to the attachment, and (b) schematically illustrates a cross-section in a state where the vacuum tip and the vacuum hose have been detached from the attachment.
Fig. 8(a) is a schematic perspective view of an attachment distal end portion in a mode of the oral suction device including the attachment. Fig. 8(b) illustrates a state of a distal end of the attachment as viewed from its distal end side.
Figs. 9 are schematic sectional views illustrating the periphery of a portion in which a tip-side electrode is to be in contact with a hose-side electrode or an attachment-side electrode. Figs. 9(a), 9(b), and 9(c) illustrate different modes, respectively.

### Description of Embodiments

Respective embodiments of the present invention will be described below with reference to the drawings representing respective examples. In the drawings, like or similar constituent elements in the respective embodiments are basically denoted by like reference signs. As for like or similar constituent elements already described in another embodiment, explanations thereof are omitted in some cases.

### (1) First embodiment

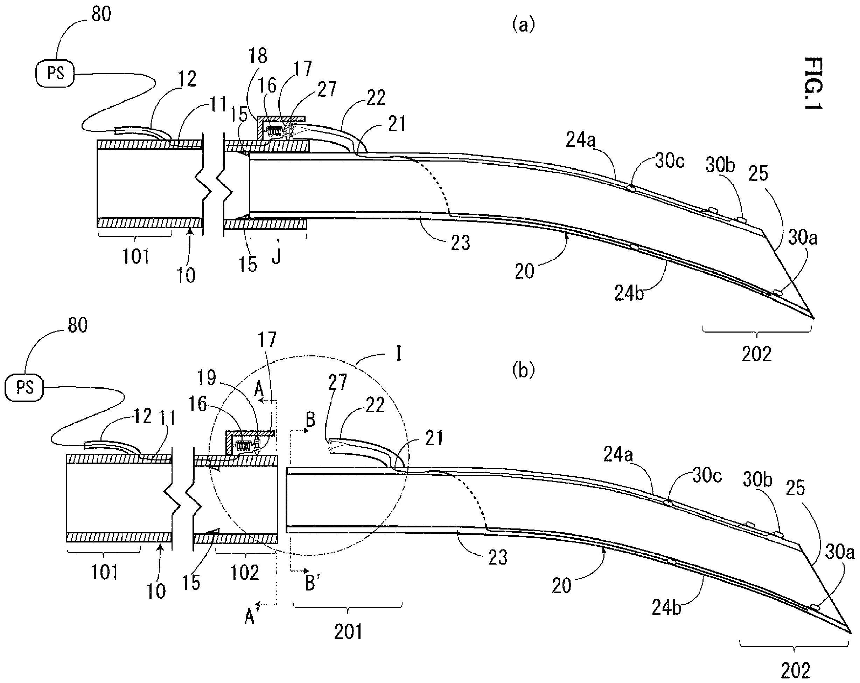

Figs. 1 are schematic cross-sectional views of an oral suction device, where (a) illustrates a state in which a vacuum tip 20 is connected to a vacuum hose 10, and (b) illustrates a state in which the vacuum tip 20 has been detached from the vacuum hose 10.

This cross-section is a longitudinal section appearing when the vacuum tip 20 and the vacuum hose 10 are cut in almost half along the longitudinal direction thereof (the same applies to the following similar drawings). Hereinafter, as for the vacuum tip 20, an end to be connected to the vacuum hose 10 is referred to as "proximal end", and an opposite end is referred to as "distal end". As for the vacuum hose 10, an end closer to a suction source is referred to as "proximal end", and an end to be connected to the vacuum tip 20 is referred to as "distal end". As for another member or element mounted to the vacuum tip 20 or the vacuum hose 10, "proximal end" and "distal end" are defined similarly.

A basic configuration of the oral suction device according to the present invention is described. This basic configuration is almost common to the following embodiments. The oral suction device includes the vacuum tip 20 having a rigid tube body and the vacuum hose 10 that is flexible. The proximal end of the vacuum hose 10 is connected to a suction source (not illustrated) such as an exhaust pump. A material for a general vacuum tip is plastic, such as polypropylene, or metal. A material for the vacuum hose 10 is, for example, soft polyvinyl chloride, silicone rubber, or polyurethane resin.

The distal end of the vacuum hose 10 is configured to allow insertion of the proximal end of the vacuum tip 20 thereto. The vacuum tip 20 is inserted into the vacuum hose 2 by a predetermined length (for example, 1 to 2 cm). A joint portion J is a portion where the vacuum tip 20 and the vacuum hose 10 overlap each other. Examples of a method for making the length of the joint portion J always constant include a method of providing a stopper 15 such as a projection on the inner surface of the vacuum hose 10 (Figs. 1), a method of making the tube diameter of the vacuum tip 20 larger on a distal end side than on a predetermined position from a proximal end side of the vacuum tip 20, and a method of making the tube diameter of the vacuum hose 10 smaller on a proximal end side than on a predetermined position from a distal end side of the vacuum hose 10 on the contrary. In any method, it is necessary to maintain a suction function of the suction device.

By inserting the vacuum tip 20 into the vacuum hose 10, internal spaces thereof communicate with each other. A suction port 25 is provided at the distal end of the vacuum tip 20. An operator holds a portion of the vacuum tip 20 near its proximal end by hand, moves the vacuum tip 20 in the oral cavity, and performs necessary suction.

In the example of Figs. 1, the tube body of the vacuum tip 20 is partially curved from the proximal end to the distal end. The length from the proximal end to the distal end of the vacuum tip 20 is approximately 10 to 15 cm, for example. In another example, the vacuum tip 20 can be a tube body curved as a whole, a straight tube body, or a tube body bent in the middle at 90° or an obtuse angle. A normal shape of a cross-section perpendicular to the longitudinal direction of the tube body is substantially circular or substantially elliptical.

In the illustrated example, the suction port 25 has a shape obtained by cutting the distal end of the tube body diagonally with respect to the longitudinal direction. Since the vacuum tip 20 is normally used while the side thereof on which the suction port 25 is open faces an object to be sucked, a convex curved surface on the side on which the suction port 25 is open is a working-side surface 24a, and a concave curved surface on the opposite side is a nonworking-side surface 24b. In another example, a rubber tip may be mounted on the suction port 25.

In the oral suction device according to the present invention, the vacuum tip 20 has an illumination function to illuminate the inside of an oral cavity. In that case, it is preferable to illuminate an area around the working-side surface 24a and/or the suction part 25. However, an illumination range is not limited thereto. The oral suction device can be configured to illuminate the entire area around the vacuum tip 20 also including the nonworking-side surface 24b. For realizing this configuration, the oral suction device of the present invention has at least the following configuration. A light source 30 in the following descriptions refers to an entire light source installed in the vacuum tip 20.

The light source 30 is arranged to ensure the illumination range and the light amount required for the vacuum tip 20. A lead wire 21 for supplying power to the light source 30 is arranged from a tip-side electrode 27 to the light source 30 through the vacuum tip 20.

The power of the light source 30 is supplied from a power supply 80, and a lead wire 12 for supplying that power passes through the vacuum hose 10 and is connected to a hose-side electrode 17.

In a state where connection between the vacuum tip 20 and the vacuum hose 10 has been completed, the hose-side electrode 17 and the tip-side electrode 27 are positioned to be in contact with and electrically connected to each other, whereby the power can be supplied from the power supply 80 to the light source 30.

An individual portion according to a first embodiment is described with reference to Figs. 1, 2, and 9(a) and (b). In a case where power is supplied from the external power supply 80 as illustrated in Figs. 1 via, for example, a household outlet, an AC adapter is required for converting alternating-current power to direct-current power.

In another embodiment, the power supply 80 may be a dry cell or a battery which is non-rechargeable. The dry cell or the battery can be installed in a connection box 18.

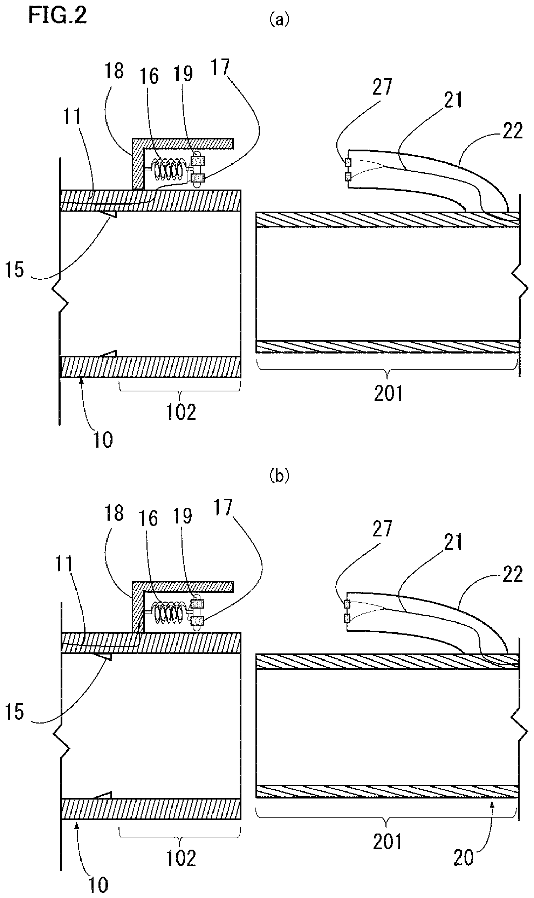

In the first embodiment, the vacuum hose 10 is provided with a hose-side branching portion 12 and the connection box 18 that electrically connects the vacuum hose 10 and the vacuum tip 20 to each other. In the present embodiment, it is assumed that the hose-side branching portion 12 has a hollow configuration. A lead wire 11 connected to and extending from the power supply 80 enters the hose-side branching portion 12 from one end farther from the tube body of the vacuum hose 10, exits from the other end, and is arranged to extend to the tube body of the vacuum hose 10. As illustrated in Fig. 2(a), the lead wire 11 is arranged from the tube body to the inside of the connection box 18, and a lead wire on a positive-electrode side and a lead wire on a negative-electrode side are respectively connected to a positive electrode and a negative electrode of the hose-side electrode 17.

In another mode related to wiring, the lead wire 11 and the hose-side electrode 17 can be connected to each other via an elastic body 16 that is a conductor, as illustrated in Fig. 2(b). The lead wire 11 and the elastic body 16 can be connected to each other in the inside of a wall of the connection box 18. In this case, at least two elastic bodies 16 are provided one of which is used for positive-electrode wire connection and the other is used for negative-electrode wire connection.

Still another mode related to wiring is a case where only one elastic body 16 as a conductor is included. In this case, only wiring related to either a positive electrode or a negative electrode is arranged via the elastic body.

In Figs. 1, the hose-side branching portion 12 projecting from the vacuum hose 10 has an arc-like shape. In another mode, the hose-side branching portion 12 can have another shape, such as an L-shape, as long as it allows wiring to be arranged from the hose-side electrode 17 to the power supply 80. In still another mode, wiring can be arranged from the power supply 80 directly to the vacuum hose 10 without providing the hose-side branching portion 12.

When a standardized socket is used at one end of the hose-side branching portion 12, to which the lead wire from the power supply enters, a popular product of an AC adapter can also be used.

The vacuum tip 20 is provided with a tip-side branching portion 22. In the tip-side branching portion 22, a tip-side electrode 27 is installed for coming into contact with the hose-side electrode 17 and being electrically connected thereto.

The lead wire 21 starting from the tip-side electrode 27 is arranged to an inside 23 of a tube wall of the vacuum tip 20 through the tip-side branching portion 22 and is connected to the light source 30. This lead wire 21 includes a positive electrode and a negative electrode. In a case where the light source 30 is arranged outside the tube body or in the inside that serves as a path for a sucked object, the lead wire 21 passing in the inside 23 of a tube wall may be made to project to the outside of the wall and connected to the light source 30 there, or a pin extending from the light source 30 may be made to project to the inside of the tube wall and connected there.

Although the above wiring in the inside of the tube wall of the vacuum hose 10 or the vacuum tip 20 can be arranged outside the tube body, it is preferable that the above wiring is arranged in the inside of the tube wall for the purpose of avoiding contact.

Since the lead wire 21 starting from the tip-side electrode 27 merely branches to each light source 30 and is connected thereto in this configuration, the positions and the number of light sources for ensuring the necessary light amount and the necessary illumination range can be flexibly designed. In Figs. 1, a state is illustrated in which a light source 30c is installed in the inside 23 of a tube wall of the vacuum tip 20, a light source 30a is installed inside the tube body of the vacuum tip 20, and a light source 30b is installed outside the tube body. A branching part of the lead wire 21 can be arranged in the inside of the tube wall along the circumferential direction (see a dotted line in Figs. 1).

It is mainly assumed that the light source 30 is a light-emitting diode (LED). The same applies to the following embodiments. An element that generates less heat, such as an LED, is preferable.

Implementing the light source 30c in the inside 23 of a tube wall of the vacuum tip 20 is described.

Almost the whole tube body of the vacuum tip 20 is formed by a tube-like light guide made of a uniform material (see Japanese Patent Application National Publication No. 2012-522302, for example), and therefore the tube body itself of the vacuum tip 20 serves as a light guiding element.

This light guide is obtained by molding, for example, transparent acrylic resin in the shape of the vacuum tip 20. For example, the inner surface and the outer surface of the tube wall are formed as mirror surfaces with respect to the inside of the tube wall. For this purpose, an appropriate reflective coating layer may be provided on the inner surface and the outer surface of the tube wall, for example. Therefore, when the light source 30c is installed in the inside 23 of a tube wall of the vacuum tip 20 as illustrated in Figs. 1, light from the light source 30c travels in the inside of the tube wall while being totally reflected, towards the distal end. The light finally reaches the suction port 25 at the distal end of the vacuum tip 20 and is projected there. Alternatively, a plurality of grooves or projections or a prism portion having a rough surface is formed on a part of the tube wall of the vacuum tip 20, whereby the light can be projected from the side surface of the tube body to outside as necessary. Various methods for projecting light from the side surface of the light guide are well known.

In the first embodiment, the tip-side branching portion 22 is attached to the working-side surface 24a. However, this position is set in order to bring the position of the hose-side electrode 17 and the tip-side electrode 27 attached to the tip-side branching portion 22 into contact with each other, and is not limited to the working-side surface 24a as long as the electrodes can be brought into contact with each other.

A hose distal end portion 102 is a region having a certain length from the distal end of the vacuum hose, as illustrated in Fig. 1(b). A tip proximal end portion 201 is a region having a certain length from the proximal end of the vacuum tip, as illustrated in Fig. 1(b). In order to allow the hose-side electrode 17 and the tip-side electrode 27 to easily come into contact with each other, the connection box 18 is preferably installed in the hose distal end portion 102 of the vacuum hose 10, and the tip-side branching portion 22 is preferably installed in the tip proximal end portion 201 of the vacuum tip 20. In Figs. 1, the tip-side branching portion 22 projecting from the vacuum tip 20 has an arc-like shape. In another mode, the tip-side branching portion 22 can have another shape, such as an L-shape, as long as it allows wiring to be arranged from the tip-side electrode 27 to the tube body of the vacuum tip 20.

Figs. 2 are schematic enlarged views of a cross-section of a region I in Fig. 1(b). In the first embodiment, the vacuum tip 20 is inserted until its proximal end stops at the position of the stopper 15 installed on the inner surface of the tube body of the vacuum hose 10. Connection between the vacuum tip 20 and the vacuum hose 10 is completed in this state. In this connection state, it is preferable that unintentional separation of the vacuum tip 20 and the vacuum hose 10 from each other is prevented by friction between contact surfaces thereof. It is preferable that during work, friction is generated to such an extent that it is difficult for them to separate from each other, and when replacement is performed, they can easily separate from each other by a certain force.

As illustrated in Figs. 2, the hose-side electrode 17 is arranged in a plate 19. The plate 19 and the connection box 18 are coupled to each other by the elastic body 16, such as a coil spring. The elastic body 16 biases the plate 19 towards the distal end of the vacuum hose 10.

It is desirable that the area of the plate 19 when the plate 19 is viewed from the distal end side is substantially the same as the area of an opening of the connection box 18 facing the distal end side but is slightly smaller. This is to prevent a contact failure between the hose-side electrode 17 and the tip-side electrode 27 caused by movement of the plate 19 within the plane of the opening of the connection box facing the distal end side.

Meanwhile, since the elastic body 16 is installed in order to press the hose-side electrode 17 arranged on the plate 19 against the tip-side electrode 27, the plate 19 is movable in the longitudinal direction in the connection box 18.

Fig. 1(a) illustrates a connection state where the vacuum tip 20 and the vacuum hose 10 are connected to each other. In this connection state, the plate 19 is subjected to a force from the tip-side branching portion 22, so that the elastic body 16 contracts slightly. The length of the elastic body 16 is determined so that it contracts by, preferably, about 5 mm by this force.

It is desirable that the elastic force of the elastic body 16 is such a force that the hose-side electrode 17 and the tip-side electrode 27 are surely brought into contact with each other by pressing the plate 19, and is sufficiently weaker than a friction force acting in a direction in which the vacuum tip 20 does not separate from the vacuum hose 10 in the connection state.

A switch operable by an operator for switching on and off of the light source 30 can be installed in the connection box 18 (not illustrated).

### (2) Second embodiment

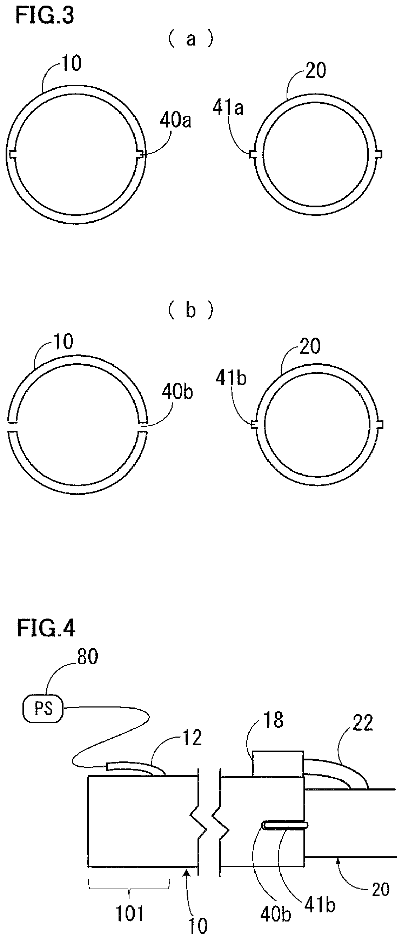

A second embodiment is described with reference to Figs. 3 and 4.

The left part in Fig. 3(a) and the left part in Fig. 3(b) are each a schematic end view of the distal end of the vacuum hose 10 as viewed from the distal end side, along a line A-A' in Fig. 1(b), and illustrate different modes related to the shape of a cut portion.

The right part in Fig. 3(a) and the right part in Fig. 3(b) are each a schematic end view of the proximal end of the vacuum tip 20 as viewed from the proximal end side, along a line B-B' in Fig. 1(b), and illustrate different modes related to the shape of a locking projection.

By inserting the vacuum tip 20 into the vacuum hose 10 so as to fit a locking projection 41a or 41b into a cut portion 40a or 40b, the vacuum tip 20 is prevented from rotating about the axis of the tube body in the circumferential direction in the connection state.

If the cut portion 40a or 40b and the locking projection 41a or 41b are not provided, a force causing a shift of the vacuum tip 20 in the circumferential direction is applied to a contact surface between the tip-side branching portion 22 and the connection box 18. This applied force becomes a load on the tip-side branching portion 22. Since contact portions of the tip-side electrode 27 and the hose-side electrode 17 in the connection box 18 are responsible for power supply from the power supply 80 to the light source 30, it is not preferable that a load is applied on the tip-side branching portion 22 including the tip-side electrode 27. In order to avoid this load, it is preferable that the tube body of the vacuum hose 10 and the tube body of the vacuum tip 20 are respectively provided with the cut portion 40a or 40b and the locking projection 41a or 41b.

Although the cut portion 40a or 40b is provided in the vacuum hose 10 and the locking projection 41a or 41b is provided on the vacuum tip 20 in the second embodiment, they can be installed in reverse. Each of the cut portion 40a or 40b and the locking projection 41a or 41b can be provided at only one location or a plurality of locations in the circumferential direction as long as they can prevent rotation of the vacuum tip 20 in the circumferential direction in the connection state.

The shapes of the cut portion 40a or 40b and the locking projection 41a or 41b are described.

Fig. 3(a) illustrates a mode in which the cut portion 40a is not cut to the outside of the tube body of the vacuum hose 10. Fig. 3(b) illustrates a mode in which the cut portion 40b is cut to the outside of the tube body of the vacuum hose 10. What is designed to be fitted into each cut portion is the locking projection 41a or 41b provided in the vacuum tip 20. Fig. 4 is a schematic enlarged view of a side surface of the region I in Fig. 1(b) in a case where the cut portion 40b and the locking projection 41b illustrated in Fig. 3(b) are provided.

The shape of the locking projection is not limited to the shape illustrated in Fig. 4, and may be any shape fitted into the cut portion, such as a circular shape, in the connection state.

### (3) Third embodiment

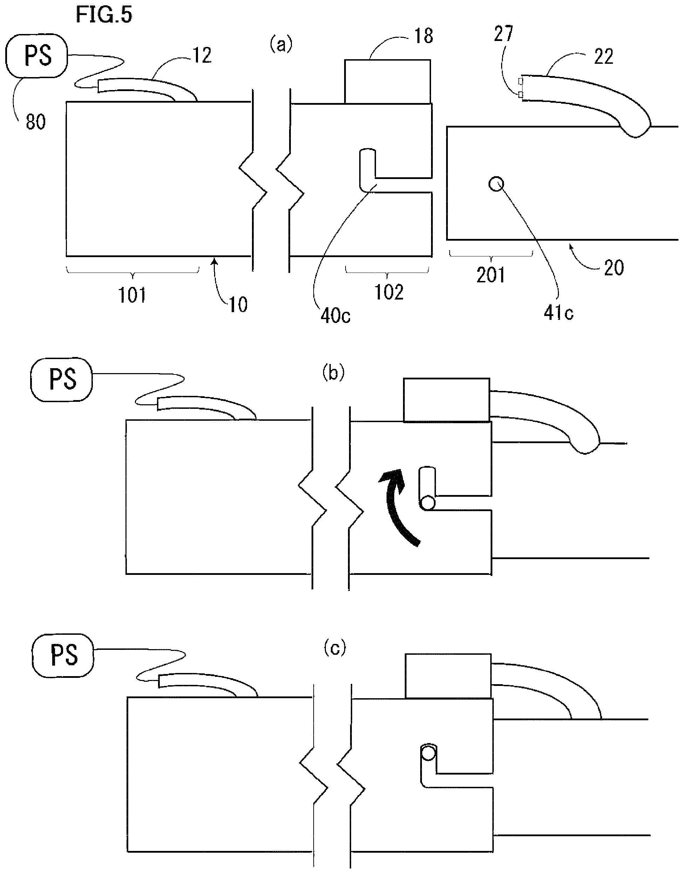

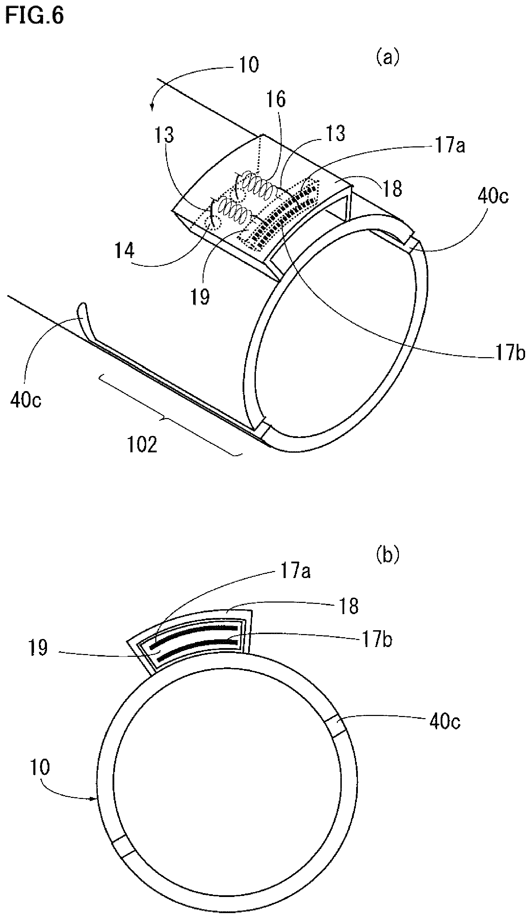

A method of bringing electrodes into contact with each other in a third embodiment is described with reference to Figs. 5 and 6.

In an oral suction device in the third embodiment, a cut portion 40c is L-shaped as illustrated in Figs. 5. The functions of the cut portion 40c and a locking projection 41c when the cut portion 40c is L-shaped are to prevent rotation of the vacuum tip 20 in the circumferential direction in the clockwise direction when the vacuum hose 10 is viewed from the distal end side and to lock the vacuum tip 20 and the vacuum hose 10 so as not to separate from each other in the connection state.

Fig. 5(a) illustrates a state of the vacuum tip 20 and the vacuum hose 10 before they are connected to each other. Fig. 5(b) illustrates a state where the vacuum tip 20 has been moved in the longitudinal direction and inserted to the deepest position so as to fit the cut portion 40c and the locking projection 41c with each other. This cut portion extending in the longitudinal direction is defined as a first portion. Fig. 5(c) illustrates a state where the vacuum tip 20 has been rotated in the circumferential direction in a direction indicated with an arrow in Fig. 5(b) from the deepest position of the first portion when the vacuum hose is viewed from the distal end side, and thus the locking projection 41c has completely moved in the entire cut portion 40c. A cut portion extending in the circumferential direction from the deepest position of the first portion is defined as a second portion. The state illustrated in Fig. 5(c) is a connection state where the vacuum tip 20 and the vacuum hose 10 are connected to each other. In this state, the cut portion 40c and the locking projection 41c perform the functions described above.

The cut portion 40c in the third embodiment may also be provided at one location or a plurality of locations in the circumferential direction of the tube body of the vacuum hose 10, similarly to the second embodiment.

In the connection state described above in the third embodiment, the hose-side electrode 17 and the tip-side electrode 27 need to be connected to each other also electrically. To realize this electrical connection, the connection box 18 is configured to correspond to movement causing rotation of the vacuum tip 20 in the circumferential direction when the vacuum hose 10 and the vacuum tip 20 are connected to each other.

Fig. 6(a) is a schematic perspective view of a distal end of a vacuum hose when the cut portion 40c having the shape illustrated in Figs. 5 is provided at two locations in the vacuum hose 10. Fig. 6(b) illustrates a state of the vacuum hose 10 as viewed from its distal end side.

As illustrated in Fig. 6(b), the connection box 18 has a certain width in the circumferential direction. During movement of the locking projection 41c of the vacuum tip 20 to the deepest position of the cut portion 40c, that is, during a transition from the state in Fig. 5(a) to the state in Fig. 5(b), the tip-side branching portion 22 is inserted to the left side of the connection box 18 illustrated in Fig. 6(b). During rotation of the vacuum tip 20 in the circumferential direction which causes a transition from the state in Fig. 5(b) to the state in Fig. 5(c), the tip-side branching portion 22 is also rotated about the axis of the vacuum hose 10 in the circumferential direction to reach the right side of the connection box 18 illustrated in Fig. 6(b). The tip-side electrode 27 and the hose-side electrode 17 continue to be in contact with each other during rotation of the tip-side branching portion 22 in the circumferential direction. Accordingly, even when the vacuum tip 20 is unintentionally rotated in the counterclockwise direction in Fig. 6(b) from the connection state, power supply to the light source 30 can be continued. Further, when an operator inserts the vacuum tip 20 to the vacuum hose 10 so as to fit the locking projection 41c into the cut portion 40c, electrical connection is realized without making the operator aware of it.

The elastic body 16 biases the plate 19 toward the distal end, thereby physically applying a force to the hose-side electrode 17 arranged on the plate 19 in a direction in which the hose-side electrode 17 comes into contact with the tip-side electrode 27. Accordingly, a contact failure in electrical connection hardly occurs in this configuration.

In the third embodiment, a lead wire arranged in the inside of the tube wall of the vacuum hose 10 extends through a hole 14 that is open on the tube wall side in the connection box, and is connected to the hose-side electrode 17 via the elastic bodies 16 as conductors, as illustrated in Fig. 6(a). The reason why two elastic bodies are installed is because one of them is used for a positive electrode and the other is used for a negative electrode. If an individual elastic body 16 is stretchable without interfering with another constituent element, three or more elastic bodies 16 can be provided. In this case, a mode may be employed in which one is used for wire connection for a positive electrode, another one is used for wire connection for a negative electrode, and the other elastic body 16 has no electrical role.

The hose-side electrode 17 is arranged as an upper hose-side electrode 17a and a lower hose-side electrode 17b on the plate 19, which are respectively connected to a positive electrode and a negative electrode. To correspond to this arrangement, the tip-side electrode 27 is also arranged as an upper tip-side electrode (not illustrated) and a lower tip-side electrode (not illustrated) on the tip-side branching portion 22. Wiring is arranged to make the positive and negative electrodes of the hose-side electrode 17 and those of the tip-side electrode 27 respectively correspond to each other.

### (4) Fourth embodiment

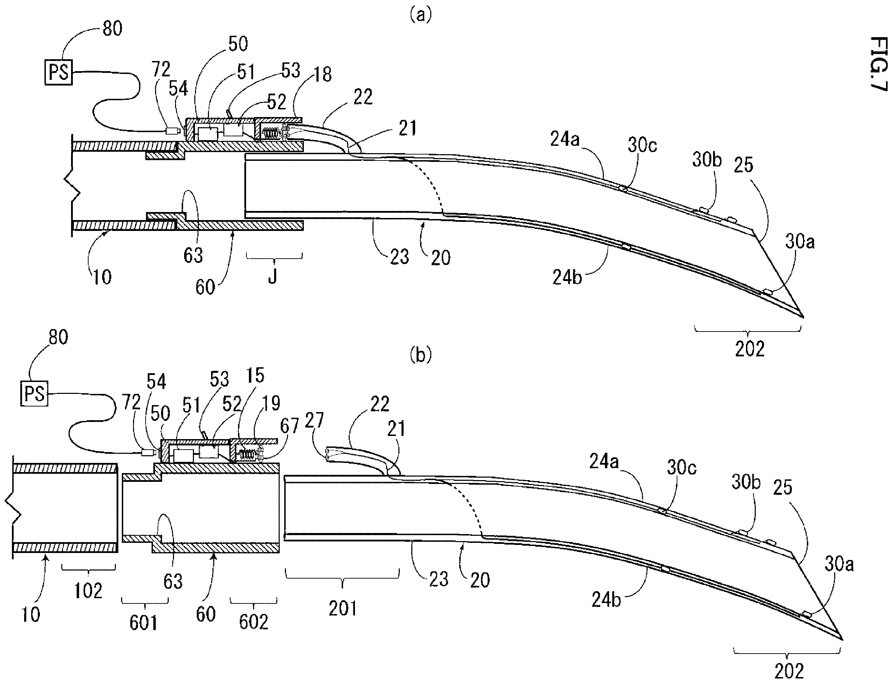

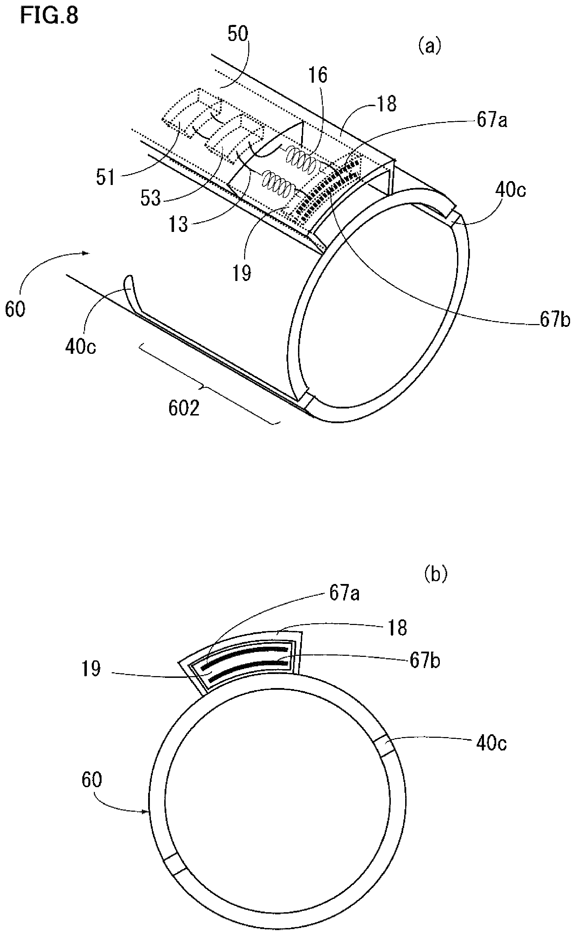

A fourth embodiment is described with reference to Figs. 7. Figs. 8 schematically illustrate a cross-section of an embodiment of an oral suction device including an attachment 60, where (a) illustrates a state where the vacuum tip 20 and the vacuum hose 10 are connected to the attachment 60, and (b) schematically illustrates a cross-section in a state where the vacuum tip 20 and the vacuum hose 10 have been detached from the attachment 60.

In the oral suction devices of the first to third embodiments described above, the connection box 18, the hose-side branching portion 12, and the like are fixed to the vacuum hose 10, and it is therefore necessary to perform wiring processing on a lead wire in the inside of the tube wall of the vacuum hose 10. In these embodiments, a general vacuum hose needs to be processed. Use of the attachment 60 illustrated in Figs. 7 eliminates the necessity of such a process, so that a general vacuum hose can be used as it is.

The attachment 60 has a tube body connectable to the vacuum tip 20 and the vacuum hose 10. The tube body is substantially cylindrical, preferably. It suffices that a material for this tube body is the same as the material for the vacuum tip 20 and is, for example, plastic or metal. The proximal end of the attachment can be inserted into the distal end of the vacuum hose 10, and the distal end of the attachment allows insertion of the proximal end of the vacuum tip 20 thereto. The length of a joint portion at each end of the attachment 60 is set to the same length as the length of the joint portion when the vacuum tip 20 and the vacuum hose 10 are directly connected to each other. For this purpose, a step 63, for example, is provided in an attachment proximal end portion 601 as illustrated in Fig. 7(b), whereby the attachment 60 can be configured to be prevented from being inserted into the vacuum hose 10 beyond a certain distance as illustrated in Fig. 7(a). Further, in an attachment distal end portion 602, a stopper such as a projection (not illustrated) can be provided on the inner surface of the tube body so as to prevent the vacuum tip 20 from being inserted to the inside of the attachment 60 beyond a certain distance. The interior space of the attachment 60 serves as a path for a sucked object.

The attachment proximal end portion 601 is a region having a certain length from the proximal end of the vacuum tip, as illustrated in Fig. 7(b). The attachment distal end portion 602 is a region having a certain length from the distal end of the attachment, as illustrated in Fig. 7(b).

In the present embodiment, the connection box 18 and a battery box 50 are provided on the outer surface of the tube body of the attachment 60. The battery box 50 in the present embodiment primarily includes a power-supply device 51 and a switch unit 52. In a case where the power-supply device 51 is a rechargeable battery, a socket 54 is also included which serves as an interface for charging the battery with the power supply 80. In that case, when the power supply is an alternating-current power supply, it is necessary to convert it to a direct-current power supply suitable for charging the power-supply device 51 via an AC adapter (not illustrated) or the like. In another embodiment, a converter can be installed in the battery box 50 without using an AC adapter. It is preferable that a connector 72 and the socket 54 when the AC adapter is used are general-purpose ones, for example, USBs.

The power-supply device 51 may be a non-rechargeable cell. When a cell or a battery is installed in the housing, use of the oral suction device does not require an external power supply. The length of the attachment 60 in the axial direction is any length as long as the length is necessary and sufficient to allow these devices to be mounted.

The switch unit 52 is for switching on and off of power supply from the power-supply device 51 to an attachment-side electrode 67. The switch unit 52 has a switch 53 for an operation by an operator of the oral suction device. Although the switch 53 has a lever shape in Figs. 7, another mode, such as a button switch and a switch that switches on and off by contact, may be employed.

In another embodiment, it can be considered that the power-supply device 51 is not included in the battery box 50. In this case, power is supplied from an external power supply. When this power supply is performed from a general household outlet, a mode in which power is supplied to the battery box 50 via an AC adapter and a mode in which a converter is installed in the battery box 50 can be considered.

The connection box 18 is substantially the same as that in the first embodiment in mechanism and function. Wiring from the socket 54 to the attachment-side electrode 67 is arranged substantially straight. For example, wiring is arranged to extend from the attachment-side electrode 67 and connected to the switch unit 52 via the elastic body 16 that is a conductor and through the wall as the boundary between the battery box 50 and the connection box 18, and is then connected to the socket 54 via the switch unit 52, the power-supply device 51, and the proximal-end side wall of the battery box 50. As described above, when a battery is used as the power-supply device 51, the battery and the attachment-side electrode 67 are electrically connected to each other.

In a connection state where the attachment 60 and the vacuum tip 20 are connected to each other, connection between the attachment-side electrode 67 and the tip-side electrode 27 is realized by substantially the same mechanism as connection between the hose-side electrode 67 and the tip-side electrode 27 in the state where the vacuum hose 10 and the vacuum tip 20 are connected to each other in the first embodiment.

In one example of usage, the vacuum hose 10 and the attachment 60 may be always connected to each other. In replacement of the vacuum tip 20, the vacuum tip 20 is detached from the attachment 60, and a new vacuum tip 20 is inserted thereinto. By inserting the vacuum tip 20 into the attachment 60, connection between the vacuum tip 20 and the attachment 60 is completed. At the same time, electrical connection between a lead wire in the attachment 60 and the light source 30 is also completed.

Figs. 7 illustrate a state where the light source 30c is installed in the inside 23 of a tube wall of the vacuum tip 20, the light source 30a is installed inside the tube body of the vacuum tip 20, and the light source 30b is installed outside the tube body, similarly to Figs. 1. The flexibility in the design related to the number of the light sources 30 and the position of each light source is substantially the same as that in the descriptions of the first embodiment.

### (5) Fifth embodiment

A fifth embodiment is described with reference to Figs. 8. Fig. 8(a) is a schematic perspective view of the attachment distal end 602 in one mode of the oral suction device including the attachment 60. In the oral suction device of the seventh embodiment, the cut portion 40c has an L-shape similarly to the third embodiment. Fig. 8(b) illustrates a state of the attachment 60 as viewed from its distal end side.

A method of connecting the attachment 60 and the vacuum tip 20 to each other in a case where the cut portion 40c is L-shaped is substantially the same as the method of connecting the vacuum hose 10 and the vacuum tip 20 to each other in the third embodiment.

The vacuum tip 20 is moved in the longitudinal direction and inserted to the deepest position so as to fit the cut portion 40c of the attachment 60 with a locking projection of the vacuum tip 20. This cut portion extending in the longitudinal direction is defined as a first portion. The vacuum tip 20 is then rotated in the circumferential direction from the deepest position of the first portion as viewed from the attachment distal end side, until the locking projection stops at the end of the cut portion 40c. A cut portion extending in the circumferential direction from the deepest position of the first portion is defined as a second portion. This final state is a connection state where the vacuum tip 20 and the attachment 60 are connected to each other.

In this state, rotation of the vacuum tip 20 in the circumferential direction in the clockwise direction when the attachment 60 is viewed from the distal end side can be prevented, and the attachment 60 and the vacuum hose 10 can be locked so as not to separate from each other in the connection state. The cut portion 40c may be provided at one location or a plurality of locations in the circumferential direction of the tube body of the attachment 60, similarly to the third embodiment. Further, the cut portion 40c may be provided in the vacuum tip 20, and a locking projection may be provided on the attachment 60. In this case, the locking projection of the attachment projects from the inner surface of the tube wall to the inside.

Also in the fifth embodiment, while the attachment 60 and the vacuum tip 20 are connected to each other, the attachment-side electrode 67 and the tip-side electrode 27 need to be connected to each other also electrically, similarly to the third embodiment. To realize this electrical connection, the connection box 18 is configured to correspond to movement causing the vacuum tip 20 to rotate in the circumferential direction when the attachment 60 and the vacuum tip 20 are connected to each other.

As illustrated in Fig. 10(b), the connection box 18 has a certain width in the circumferential direction. During movement of the locking projection 41c of the vacuum tip 20 to the deepest position of the cut portion 40c, the tip-side branching portion 22 is inserted to the left side of the connection box 18 illustrated in Fig. 10(b). The vacuum tip 20 rotates in the circumferential direction, and the tip-side branching portion 22 is also rotated about the axis of the attachment 60 in the circumferential direction to reach the right side of the connection box 18 illustrated in Fig. 10(b). The tip-side electrode 27 and the attachment-side electrode 67 continue to be in contact with each other during rotation of the tip-side branching portion 22 in the circumferential direction. Accordingly, even when the vacuum tip 20 is unintentionally rotated in the counterclockwise direction in Fig. 10(b) from the connection state, power supply to the light source 30 can be continued. Further, when an operator inserts the vacuum tip 20 to the attachment 60 so as to fit the locking projection into the cut portion 40c, electrical connection is realized without making the operator aware of it.

The elastic bodies 16 and the plate 19 are substantially the same as those in the third embodiment in structure and function.

In the present embodiment, as illustrated in Fig. 10(a), a lead wire 13 from the power-supply device 51 enters a switch unit 53, a positive electrode of the lead wire 13 exiting from the switch unit 53 is then connected to one of the elastic bodies 16 as conductors, and a negative electrode of the lead wire 13 is connected to the other. The elastic bodies 16 are connected to an upper attachment-side electrode 17a and a lower attachment-side electrode 17b, respectively. The tip-side electrode 27 is also arranged as an upper tip-side electrode (not illustrated) and a lower tip-side electrode (not illustrated) on the tip-side branching portion 22, and wiring is arranged on the vacuum tip 20 side in such a manner that positive and negative electrodes of the hose-side electrode 17 and the tip-side electrode 27 correspond to each other.

The fifth embodiment is similar to the third embodiment also in that three or more of the elastic bodies 16 can be provided.

Descriptions are provided for a contact surface between the tip-side electrode 27 and the hose-side electrode 17 or the attachment-side electrode 67, which are common to the above embodiments.

In each embodiment, it has been primarily assumed that while the vacuum tip 20 and the vacuum hose 10 or the attachment 60 are connected to each other, corresponding electrodes are opposed to each other in such a manner that the corresponding electrodes for a positive electrode are in contact with and electrically connected to each other and the corresponding electrodes for a negative electrode are in contact with and electrically connected to each other.

As for the contact surfaces, it is desirable that, when one of the corresponding electrodes is flat, the other is also flat. Due to close contact between the flat surfaces by means of the elastic body 16, stable electrical connection is realized.

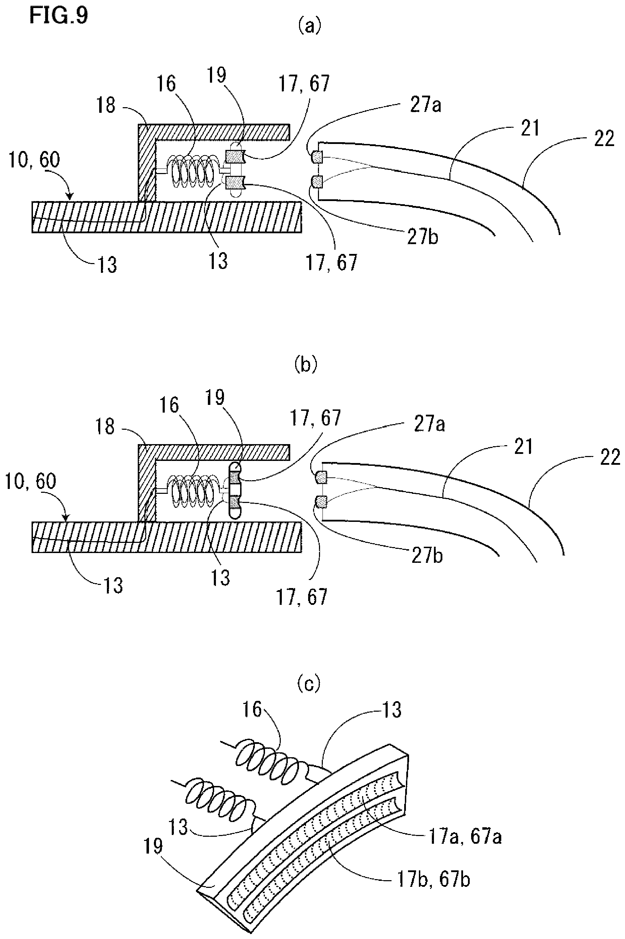

Further, as illustrated in Fig. 9(a), the contact surface of the hose-side electrode 17 or the attachment-side electrode 67, which is to be in contact with the tip-side electrode 27, can be concave, and the contact surface of the tip-side electrode 27, which is to be in contact with the hose-side electrode 17 or the attachment-side electrode 67, can be convex. Due to increase in the area of contact between the corresponding electrodes and the shapes fitted with each other, the contact state can be easily maintained. The tip-side electrode 27 may be concave, and the hose-side electrode 17 or the attachment-side electrode 67 may be convex.

In another mode, a part of the plate 19 itself can be formed as the hose-side electrode 17 or the attachment-side electrode 67, the part of the plate 19 serving as the electrode can be concave, and the tip-side electrode 27 opposed thereto can be convex, as illustrated in Fig. 9(b).

Also in the hose-side electrode 17 or the attachment-side electrode 67 (Figs. 6 or 8) when the vacuum hose 10 or the attachment 60 has the cut portion 40c as illustrated in Figs. 5, each of the upper electrode (17a or 67a) and the lower electrode (17b or 67b) can have a shape that is concave in a cross-section along the radial direction of the tube body (Fig. 9(c)). In this case, the tip-side electrode 27 has a convex shape that can slide in the circumferential direction while being fitted into the concave shape of the hose-side electrode 17 or the attachment-side electrode 67.

While the present invention has been described with reference to the drawings illustrating some embodiments of the present invention, a mode in which one plural configurations described in one embodiment are combined with one or plural configurations described in another embodiment is included in one of the embodiments of the present invention, as long as the mode meets the spirit of the present invention. Further, a variety of modifications may be made as long as the modifications meet the spirit of the present invention and the modifications are also included in the embodiments of the present invention.

### Reference Signs List

10 vacuum hose
101 hose proximal end portion
102 hose distal end portion
11 lead wire
12 hose-side branching portion
13 lead wire
15 stopper
16 elastic body
17 hose-side electrode
17a upper hose-side electrode
17b lower hose-side electrode
18 connection box
19 plate
20 vacuum tip
201 tip proximal end portion
202 tip distal end portion
21 lead wire
22 tip-side branching portion
23 inside of tube wall
24a working-side surface
24b nonworking-side surface
25 suction port
27 tip-side electrode
27a upper tip-side electrode
27b lower tip-side electrode
30, 30a, 30b, 30c light source
40a, 40b, 40c cut portion
41a, 41b, 41c locking projection
50 battery box
51 power-supply device
52 switch unit
53 switch
54 socket
60 attachment
601 attachment proximal end portion
602 attachment distal end portion
63 step
67 attachment-side electrode
67a upper attachment-side electrode
67b lower attachment-side electrode
72 connector
80 power supply
J joint portion

## Claims

1. An oral suction device including a vacuum hose connected to a suction source and a vacuum tip having a tube body that has a proximal end connectable to a distal end of the vacuum hose and a distal end as a suction port, the oral suction device comprising:
a light source provided in the vacuum tip to illuminate inside of an oral cavity;
a hose-side electrode provided in a distal end portion of the vacuum hose and electrically connected to a power supply; and
a tip-side electrode, provided in a proximal end portion of the vacuum tip and electrically connected to the light source, for receiving power from the hose-side electrode, wherein
the tip-side electrode and the hose-side electrode are positioned to be in contact with and electrically connected to each other in a state where the vacuum tip and the vacuum hose have been connected to each other.

2. The oral suction device according to claim 1, wherein
one of ends of the vacuum tip and the vacuum hose, connected to each other, has a cut portion extending in a longitudinal direction, and the other of the ends has a locking projection having a certain length in the longitudinal direction, and
when the vacuum tip is inserted to the vacuum hose with positions of the cut portion and the locking projection aligned with each other, connection between the vacuum tip and the vacuum hose is completed in a state where the locking projection has stopped at a deepest position in the cut portion in a joint portion between the vacuum tip and the vacuum hose.

3. The oral suction device according to claim 1, wherein
one of ends of the vacuum tip and the vacuum hose, connected to each other, has a cut portion formed by a first portion extending in a longitudinal direction and a second portion extending in a circumferential direction from a deepest position in the first portion, and the other of the ends has a locking projection, and
when the vacuum tip is inserted to the vacuum hose with positions of the cut portion and the locking projection aligned with each other, connection between the vacuum tip and the vacuum hose is completed by moving the locking projection in the longitudinal direction to the deepest position in the first portion of the cut portion and then in the circumferential direction in the second portion in a joint portion between the vacuum tip and the vacuum hose.

4. The oral suction device according to any of claims 1 to 3, further comprising an elastic body provided on the vacuum hose and configured to bias the hose-side electrode toward the distal end of the vacuum hose.

5. The oral suction device according to any of claims 1 to 3, further comprising elastic bodies that are a plurality of conductors provided on the vacuum hose and configured to bias the hose-side electrode toward the distal end of the vacuum hose, wherein
the power supply and the hose-side electrode are electrically connected to each other via the elastic bodies by electrically connecting one of the elastic bodies to a positive electrode of the power supply at one end and to a positive electrode of the hose-side electrode at the other end and electrically connecting another one of the elastic bodies to a negative electrode of the power supply at one end and to a negative electrode of the hose-side electrode at the other end.

6. The oral suction device according to any of claims 1 to 5, wherein the light source is provided inside and/or outside a tube body of the vacuum tip and/or the light source is provided in an inside of a tube wall of the vacuum tip when the tube wall of the vacuum tip is made of a transparent or translucent resin.

7. An oral suction device in a shape of a tube body including a vacuum hose connected to a suction source, an attachment having a proximal end insertable to a distal end of the vacuum hose, and a vacuum tip having a proximal end connectable to a distal end of the attachment and a distal end as a suction port, the oral suction device comprising:
a light source provided in the vacuum tip to illuminate inside of an oral cavity;
an attachment-side electrode provided in a distal end portion of the attachment and electrically connected to a power supply; and
a tip-side electrode, provided in a proximal end portion of the vacuum tip and electrically connected to the light source, for receiving power from the attachment-side electrode, wherein
the tip-side electrode and the attachment-side electrode are positioned to be in contact with and electrically connected to each other in a state where the vacuum tip and the attachment have been connected to each other.

8. The oral suction device according to claim 7, further comprising a power-supply device provided outside a tube body of the attachment, wherein
the power-supply device and the attachment-side electrode are electrically connected to each other.

9. The oral suction device according to claim 7 or 8, wherein
one of ends of the vacuum tip and the attachment, connected to each other, has a cut portion extending in a longitudinal direction, and the other of the ends has a locking projection having a certain length in the longitudinal direction, and
when the vacuum tip is inserted to the attachment with positions of the cut portion and the locking projection aligned with each other, connection between the vacuum tip and the attachment is completed by a state where the locking projection has stopped at a deepest position in the cut portion in a joint portion between the vacuum tip and the attachment.

10. The oral suction device according to claim 7 or 8, wherein
one of ends of the vacuum tip and the attachment, connected to each other, has a cut portion formed by a first portion extending in a longitudinal direction and a second portion extending in a circumferential direction from a deepest position in the first portion, and the other of the ends has a locking projection, and
when the vacuum tip is inserted to the attachment with positions of the cut portion and the locking projection aligned with each other, connection between the vacuum tip and the attachment is completed by moving the locking projection in the longitudinal direction to the deepest position in the first portion of the cut portion and then in the circumferential direction in the second portion in a joint portion between the vacuum tip and the attachment.

11. The oral suction device according to any of claims 7 to 10, further comprising an elastic body provided on the attachment and configured to bias the attachment-side electrode toward the distal end of the attachment.

12. The oral suction device according to any of claims 7 to 10, further comprising elastic bodies that are a plurality of conductors provided on the attachment and configured to bias the attachment-side electrode toward the distal end of the attachment, wherein
the power-supply device and the attachment-side electrode are electrically connected to each other via the elastic bodies by electrically connecting one of the elastic bodies to a positive electrode of the power-supply device at one end and to a positive electrode of the attachment-side electrode at the other end and electrically connecting another one of the elastic bodies to a negative electrode of the power-supply device at one end and to a negative electrode of the attachment-side electrode at the other end.

13. The oral suction device according to any of claims 7 to 12, wherein the light source is provided inside and/or outside a tube body of the vacuum tip and/or the light source is provided in an inside of a tube wall of the vacuum tip when the tube wall of the vacuum tip is made of a transparent or translucent resin.
